Europäisches Patentamt

**European Patent Office**

Office européen des brevets

(11) Publication number: **0 171 857**
**A2**

## (12) EUROPEAN PATENT APPLICATION

(21) Application number: **85201281.4**

(22) Date of filing: **08.08.85**

(51) Int. Cl.⁴: **G 05 B 19/23**
**G 05 B 19/405**

(30) Priority: **16.08.84 ES 535190**

(43) Date of publication of application:
**19.02.86 Bulletin 86/8**

(84) Designated Contracting States:
**AT BE CH DE FR GB IT LI LU NL SE**

(71) Applicant: **Pros Bresco, Francisco**
**Puerto Deportivo no. 15**
**El Masnou (Barcelona)(ES)**

(72) Inventor: **Pros Bresco, Francisco**
**Puerto Deportivo no. 15**
**El Masnou (Barcelona)(ES)**

(74) Representative: **Thirion, Robert et al,**
**Bureau GEVERS S.A. 7, rue de Livourne Bte 1**
**B-1050 Bruxelles(BE)**

(54) **Control and command system to displace a chain whose links are into gear with a cog-wheel.**

(57) A control and command system for the displacement of a chain whose links are into gear with a cog-wheel, constituted of an electronic system comprising : a switching power supply unit (1), two pulse shapers (9), of the Schmitt trigger type, a microprocessor (10) composed of a central processing unit (CPU), a random access memory (RAM) and a read-only memory (ROM), two binary coded microchoppers, an emergency STOP switch (7), a keyboard (13), a liquid crystal display (12) with the necessary elements for its functioning, an auxiliary light indicator and power drivers (4) responsible of transfering the orders from the microprocessor to the relays, which are connected to a manual selector HEAVE IN/LET GO which gives the command signals to the external control circuits of the actuation motor, depending on the manual functioning or automatic functioning by computer.

./...

Croydon Printing Company Ltd

This invention refers to a control and command system do displace a chain whole links are into gear with a cogwheel.

This system is composed of an electronic circuit containing :

a) a switching power supply unit to fit the entry voltage of the system to the most appropriate values for the specific functioning of each of its elements or blocks,

b) two pulse shapers, of the Schmitt trigger type, to connect the signal of the inductive pickups to the microprocessor,

c) a microprocessor composed of a central processing unit (CPU), a random access memory (RAM) and a read-only memory (ROM), which by means of the corresponding programme execution, controls and acts on all the associated peripheral elements, mentioned further down,

d) two binary coded microchoppers for the initial development programming of the group formed by the chain and the axis on which it is rolled up, and also of the maximum available chain length,

e) an emergency STOP switch to stop at any moment an order already processed and in execution,

f) a keyboard of twelve keys matriced XY to introduce the data to be processed and the orders to be executed,

g) a liquid crystal display with the necessary elements for its functioning (decoder, back-plane, and voltage stabilizer) to visualise the introduced data and the state of the process supplied by the microprocessor,

h) auxiliar light indicators that give information about the measure units in meters, feet or fathoms, and also about the sense of rotation of the axis for rolling up the chain, and about the approximation to the programmed value,

i) drivers responsible of transfering the order of the microprocessor to the corresponding relays, which are conveniently interconnected to a manual selector HEAVE IN/LET GO to give, according to its functioning (automatic by computer or manual), the command signal to the external control circuit of the anchor windlass or activation motor.

Forthwith it is of interest to explain a practical example : the assumption of the control and command of a chain length for a boat anchor. First of all, the elements that are shown on the schematic drawing which, as an example, forms part of the invention are : as entries the general supply 1 and the anchor windlass 2, and as exits the rank 3 that lets go, the heaver 4 that collects the alarm 5.

Going in the different elements, it is pointed out : the general power supply 1 which supplies energy, through the power supply unit 20 to the illumination 18 of the display 12, to the voltage stabilizer 19 of the microprocessor and to the ON/OFF switch 11. The display 12 is provided with a decoder 24, a back-plane 25 and its own voltage stabilizer 26.

The detectors of the wildcat position (axis on which the chain rolls up) of the anchor windlass 2 are two inductive pickups 6 activated by a metallic piece, so that there is a variation on the exit signal of each pickup in succession order, to identify the rotation sense.

The system has the possibility of programming at the moment of installation, the development of the group wildcat/-chain in 22, that is, the obtained length in one rotation, to adapt itself to the different diameters of the wildcat and the pitch between the links of the chain. This programming is done by a binary coded microchopper.

Likewise, the maximum length of available chain (23) can be programmed, so that it does not accept in this sense any erroneous orders, with a binary coded microchopper.

To know at any time the anchor position, the inductive pickups 6, the signal pulse shapers 9 ( Schmitt trigger) as well as the microprocessor 10 with its work syncroniser 28, and its keyboard 13, must be permanently fed; the rest of the circuit is annulled by the ON/OFF switch when the function of the system is switched off.

If by any chance the feeding is cut off, or at the first set up, the display 12 shows an intermittent F (FAULT) which gives notice of the occurred circumstance.

To start the system, the anchor must be placed at the reference point zero and the switch 11 (ON) must be pushed, holding pushed the zero key at the same time, so that the datum 000 is computed on the display 12 which shows the anchor position.

The light indicators of the display 12 show the measure unit of the chain length of the anchor in either meters, feet or fathoms . To carry out a unit change, it is necessary to push the ENTER key for three seconds. When the exit rank 3 or heaver 4 is activated, either automatically or manually 21, a red arrow is illuminated in an upward or downward sense on the light indicator 27.

To program a new position for the chain, it is necessary to introduce the desired length by the keyboard 13, the letter P (PROGRAMMING) and the length in three figures in the previously chosen unit appearing on the display 2 in intermittent light. If the datum is correct, the ENTER key is pushed and the letter A (AUTOMATIC) appears on the display, putting constantly up to date the value on display 12 till it arrives to the required length.

If the introduced datum is wrong and needs correction before processing, it can be cancelled by pushing the CLEAR key, so that the display 12 shows the previous chain length ready for a new programming.

In case of programming illogical data, as for instance a greater length than the available chain length, the device will not accept the execution, and on pushing the ENTER key, the letter E (ERROR) will appear on the display 12 displaying again the previous chain length after a few seconds.

The introduced instructions by the keyboard 13 are processed, and the central unit 10 (CPU) supplies the orders to the power drivers 14 to activate the corresponding relays 15, 16 and 17.

The system comprises an auxiliary exit 5 for external alarm which is activated at the same time as the internal buzzer and the corresponding light signal 27. This acoustic signal is activated when the anchor gets to the programmed position or else six rotations of the wildcat before it gets to the reference point.

The duration of the acoustic signal is of approximately half a second, and in case of approximation to the reference point a signal is generated per rotation.

Also the system comprises an emergency stop 7, that blocks any started operation.

The external feeding of the device is foreseen with a 10 to 40 Vcc margin so that it can be connected without any changes to a 12 V, 24 V or 32 V battery system. This is achieved by a switched power supply unit, so that it keeps practically constant the power absorbed by the system, whatever its feeding voltage may be.

The presentation on display 12 is done by a liquid crystal (LCD) that is illuminated later on by transparency to be visualised in surroundings with little environmental light. The control of this illumination is external and can be connected to the other instruments of a control panel, its activation being provided by the battery positive or negative to be adapted to the greatest number of existing real cases.

The automatic system of programming the anchor windlass incorporates also a manual command 21 of the rotation order, being the microprocessor 10 ready to know the position in a manual as well as in an automatic way. To prevent unexpected actions, the necessity is foreseen to act simultaneously on two commands to activate the manual system.

If by the manual command the anchor is forced to go down deeper than permitted by the maximum available chain length and previously introduced at the moment of installation of the system 23, the acoustic and optical alarm will be activated once on each wildcat rotation and the display will continue to indicate the length intermittently.

As it is easy to understand, the actual system is a simple and quite safe solution not only in the example case (control of the length of an anchor chain of a boat) but also in any other situations where the control and command of a mobile element cooperating with a chain gearing with a cog-wheel is required.

It has to be understood that the invention is not limited to the described details because many changes and variants may be provided without departing from the scope of the present invention.

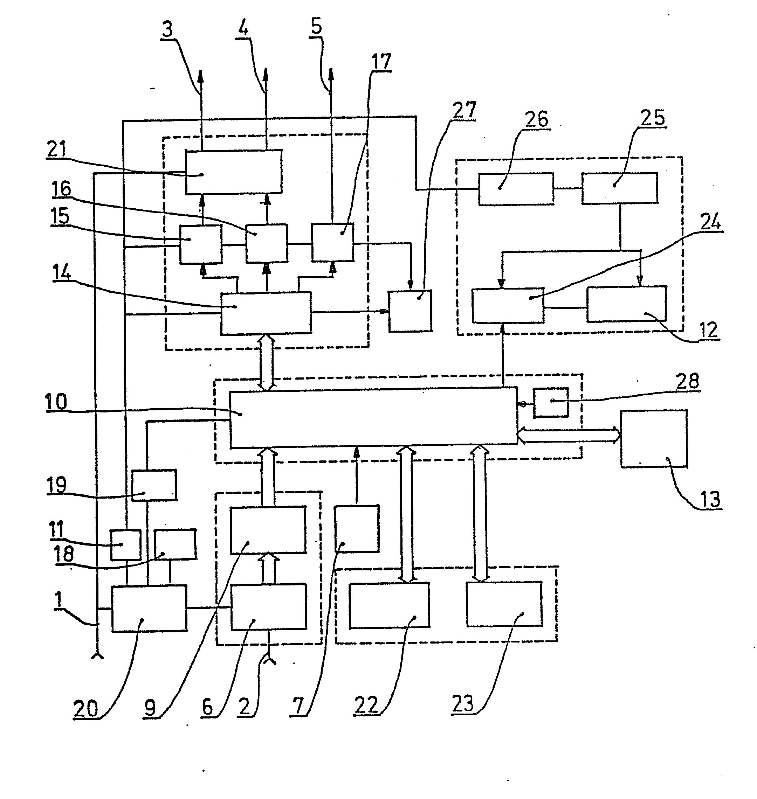

## CLAIM

1. A control and command system for the displacement of a chain whose links are into gear with a cog-wheel, characterised by being constituted of an electronic system comprising :

a) a switching power supply unit (1) to fit the entry voltage of the system, to the required values for the specific functioning of each of its elements,

b) two pulse shapers ( 9), of the Schmitt trigger type, to connect the signal of the inductive pickups to the microprocessor,

c) a microprocessor (10) composed of a central processing unit (CPU), a random access memory (RAM) and a read-only memory (ROM), which by means of the corresponding programme execution, controls and acts on all the associated peripheral elements, mentioned further down,

d) two binary coded microchoppers for the initial development programming of the group formed by the chain and the axis on which it is rolled up, and also of the maximum available chain length,

e) an emergency STOP switch (7) to stop at any moment an order already processed and in execution,

f) a keyboard (13) of twelve tables matriced XY to introduce the data to be processed and the orders to be executed,

g) a liquid crystal display (12) with the necessary elements for its functioning (decoder, back-plane, voltage stabilizer) to visualise the introduced data and the state of the process supplied by the microprocessor,

h) an auxiliar light indicator which gives information about the measure units and the rotation sense of the axis that rolls up the chain, and the approximation to the programmed value,

i) power drivers (4) responsible of transfering the orders from the microprocessor to the relays, which are connected to a manual selector HEAVE IN/LET GO which gives the command signals to the external control circuits of the actuation motor, depending on the manual functioning or automatic functioning by computer.